(19) Europäisches Patentamt / European Patent Office / Office européen des brevets

(11) **EP 3 889 855 B1**

(12) **EUROPEAN PATENT SPECIFICATION**

(45) Date of publication and mention of the grant of the patent:
**13.08.2025 Bulletin 2025/33**

(21) Application number: **20845767.1**

(22) Date of filing: **17.04.2020**

(51) International Patent Classification (IPC):
**G06Q 10/04** (2023.01)    **G06Q 10/06** (2023.01)
**G06Q 50/06** (2024.01)    **H02M 1/32** (2007.01)
**H02J 3/36** (2006.01)    **G05B 13/02** (2006.01)

(52) Cooperative Patent Classification (CPC):
**G06Q 10/04; G06Q 10/0635;** G06Q 50/06;
H02J 3/001; H02J 2203/10; Y04S 10/50

(86) International application number:
**PCT/CN2020/085397**

(87) International publication number:
**WO 2021/164118 (26.08.2021 Gazette 2021/34)**

(54) **AC/DC BULK POWER GRID DYNAMIC SECURITY RISK SITUATION ROLLING PROSPECTIVE EARLY WARNING METHOD AND SYSTEM**

VERFAHREN UND SYSTEM ZUR DYNAMISCHEN SICHERHEITSRISIKOSITUATION FÜR HYBRIDE AC/DC-GITTER MIT GROSSEM MASSSTAB

PROCÉDÉ ET SYSTÈME D'AVERTISSEMENT PRÉCOCE POTENTIEL DE ROULEMENT DE SITUATION DE RISQUE DE SÉCURITÉ DYNAMIQUE DE RÉSEAU D'ALIMENTATION DE MASSE CA/CC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2020 CN 202010107988**

(43) Date of publication of application:
**06.10.2021 Bulletin 2021/40**

(73) Proprietor: **Shandong University**
**Jinan, Shandong 250061 (CN)**

(72) Inventors:
 • **LIU, Yutian**
   **Shandong 250061 (CN)**
 • **YAN, Jiongcheng**
   **Shandong 250061 (CN)**
 • **LI, Changgang**
   **Shandong 250061 (CN)**

(74) Representative: **ZHAOffice SPRL**
**Rue de Bedauwe 13**
**5030 Gembloux (BE)**

(56) References cited:
WO-A1-2018/199658    CN-A- 101 266 665
CN-A- 101 325 337    CN-A- 109 103 883
CN-A- 109 524 982

 • RENEDO JAVIER ET AL: "Coordinated Control in VSC-HVDC Multi-Terminal Systems to Improve Transient Stability: The Impact of Communication Latency", ENERGIES, vol. 12, no. 19, 24 October 2019 (2019-10-24), CH, pages 3638, XP055845570, ISSN: 1996-1073, DOI: 10.3390/en12193638
 • GLAVIC MEVLUDIN: "(Deep) Reinforcement learning for electric power system control and related problems: A short review and perspectives", ANNUAL REVIEWS IN CONTROL, PERGAMON, AMSTERDAM, NL, vol. 48, 1 January 2019 (2019-01-01), pages 22 - 35, XP085923706, ISSN: 1367-5788, [retrieved on 20191012], DOI: 10.1016/J.ARCONTROL.2019.09.008

**Description**

**Field of the Invention**

The present invention belongs to the field of power grid dynamic security risk early warning, and in particular relates to a rolling early warning method and system of dynamic security risk situation for a large scale hybrid alternating current/direct current (AC/DC) power grid.

**Background of the Invention**

The article "Coordinated Control in VSC-HVDC Multi-Terminal Systems to Improve Transient Stability: The Impact of Communication Latency", published ENERGIES, vol. 12, no. 19 on 24 October 2019 discloses a rolling early warning method of dynamic security risk situation for a large scale hybrid AC/DC grid which is able to generate future operating conditions based on forecast information of load power and renewable generation for the AC/DC grid.

With the application of high-capacity high-voltage direct-current (HVDC) transmission technology, the modern power system has become a large scale hybrid AC/DC power grid. Local short-circuit faults in an AC grid can trigger successive commutation failures or blocking of HVDC links, which can result in large scale power flow transfer and huge power imbalance in the AC grid, and destroy the security of the whole grid. Security risk situation early warning is one of key techniques to safeguard the secure operation of a power grid, which performs dynamic security assessment (DSA) for future possible operating conditions (OCs) in advance and identifies high-risk OCs. It can set aside sufficient time and provide valuable decision information for preventive control. Because of the interconnection of the power grid and the application of power electronics technology, the scale of the power grid is significantly enlarged and the mathematical models of devices are more complex. The computing burden of time-domain simulation is significantly increased, which cannot satisfy the computing time request of online application. Meanwhile, large scale renewable generation is integrated into the power grid. Due to the uncertainty of the renewable generation, the number of the OCs for the large scale hybrid AC/DC power grid at the future moment is significantly increased, which further increases the difficulty of the early warning.

Existing researches of security risk situation early warning mainly include the method based on severity function, the method based on the unserved MW load, and the method based on control cost. In the method based on severity function, the type and the parameters of the severity functions are chosen by transmission system operators (TSOs) subjectively, which makes the early warning results have insufficient engineering meaning. In the method based on the unserved MW load, the index of the unserved MW load cannot provide valuable decision information for subsequent preventive control. The early warning method based on control cost analyzes the control cost of different types of control actions, and then ranks the OCs according to the type of control actions needed to ensure the power grid security, which has explicit engineering meaning and can provide valuable decision information for preventive control.

However, the existing early warning method based on control cost has the following shortcomings: (1) HVDC set-point control is one of important control actions of the large scale hybrid AC/DC power grid, but the existing early warning ranking strategies do not include this control action. (2) After dynamic security constraints are considered, the computing speed of existing early warning methods cannot satisfy the speed request of online application. (3) According to the satisfaction of security constraints, operating states of the large scale hybrid AC/DC power grid are divided into the normal and secure state, the normal and insecure state, and the emergency state, which cannot be reflected by existing early warning ranking results.

**Summary of the Invention**

In order to solve the above shortcomings, the present invention provides a rolling early warning method and system of dynamic security risk situation for a large scale hybrid AC/DC power grid according to respectively claims 1 and 7, which takes an available transfer capability (ATC) as the security margin index of the large scale hybrid AC/DC power grid, deploys a deep learning technology to fast evaluate the ATC considering dynamic security constraints, and achieves a layered and hierarchical early warning by considering a type of operating state of the large scale hybrid AC/DC power grid and a type of preventive control action needed to ensure the power grid security. In the online application, the latest load power forecast information, the latest renewable generation forecast information and the available preventive control resource information are periodically acquired. The early warning result is updated and the rolling early warning is achieved.

To achieve the above purposes, the present invention adopts the following technical scheme.

In the first aspect, the present invention proposes a rolling early warning method of dynamic security risk situation for a large scale hybrid AC/DC power grid according to claim 1.

In the second aspect, the present invention proposes a rolling early warning system of dynamic security risk situation for a large scale hybrid AC/DC power grid according to claim 7.,

Compared with the existing technologies, the beneficial effects of the present invention are:

(1) The present invention reasonably analyzes the control cost of HVDC set-point control, and adds this control action into the early warning ranking strategy, which improves the validity of early warning results.

(2) The present invention utilizes the deep learning technique to construct a fast TTC estimation model, which can fast estimate the TTC of given OCs considering multiple dynamic security constraints. As the time-domain simulation is avoided, the early warning results of security risk situation considering dynamic security constraints can be fast determined.

(3) The present invention proposes the layered and hierarchical early warning system considering the type of operating state of the large scale hybrid AC/DC power grid and the control cost that is needed. Compared with the existing early warning methods based on control cost, the proposed method can reflect the security of OCs more comprehensively, and has explicit engineering meaning.

## BRIEF DESCRIPTION OF THE DRAWINGS

The drawings constituting a part of the present application are used for providing a further understanding of the present application, and illustrative embodiments of the present application and the explanations thereof are used for interpreting the present application, and do not constitute undue limits to the present disclosure.

FIG. 1 illustrates a flowchart of rolling early warning of dynamic security risk situation for a large scale hybrid AC/DC power grid.

FIG. 2 illustrates a structure of a fast TTC estimation model.

FIG. 3 illustrates a layered and hierarchical early warning.

FIG. 4 illustrates a flowchart of early warning rank determination based on types of preventive control actions that are needed.

FIG. 5 illustrates a flowchart of rolling update of an early warning result.

FIG. 6 illustrates a diagram of a rolling early warning system of dynamic security risk situation for the large scale hybrid AC/DC power grid.

## DETAILED DESCRIPTION OF THE EMBODIMENTS

It should be noted that the following detailed descriptions are illustrative and are intended to provide a further description of the present disclosure. Unless otherwise indicated, all technical and scientific terms used herein have the same meanings as commonly understood by those of ordinary skill in the art to which the present application belongs.

It should be noted that the terms used herein are merely for the purpose of describing particular embodiments, rather than limiting the exemplary embodiments of the present disclosure. As used herein, unless otherwise explicitly stated in the context, a singular form is intended to include plural forms. In addition, it should also be understood that when the terms "comprise" and/or "include" are used in the specification, they indicate the presence of features, steps, operations, devices, components, and/or combinations thereof.

Embodiment 1

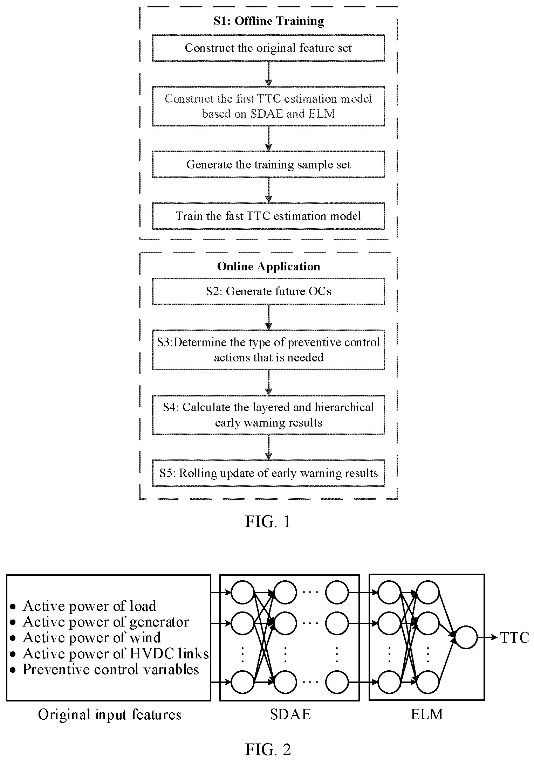

As shown in Fig. 1, the present invention proposes a rolling early warning method of dynamic security risk situation for a large scale hybrid AC/DC power grid, which includes:

S1: SDAE and ELM are deployed to construct a fast TTC estimation model. Training samples are utilized to train the fast TTC estimation model.

S2: Future OCs are generated based on load power forecast information and renewable generation forecast information.

S3: Types of preventive control actions needed to satisfy the ATC margin constraint are determined by combining the fast TTC estimation model and a heuristic search algorithm.

S4: According to a type of operating state of the large scale hybrid AC/DC power grid and the types of the preventive control actions that are needed, a layered and hierarchical early warning is performed for the future OCs.

S5: Latest load power forecast information, latest renewable generation forecast information, and latest preventive control resource information are periodically acquired. An early warning result is updated and the rolling early warning is achieved.

In S1, the original feature set of the fast TTC estimation model is constructed by considering the operating features relevant to TTC and the control variables of preventive control actions. The original feature set includes the active power of loads, generators, wind farms and HVDC links, the amount of power of generator power re-dispatch, HVDC set-point control and load shedding.

The input features of the fast TTC estimation model need to include all factors influencing TTC. Assuming that load power factors and wind generation power factors are constant, the active power of loads, generators, wind farms and HVDC links is chosen as the features that represent an OC. Additionally, TTC can be improved by preventive control actions. Therefore, control variables of preventive control actions are also chosen as input features.

Hence the input feature set includes the active power of loads, generators, wind farms and HVDC links, and the control variables of preventive control actions. The typical preventive control variables that are considered include the amount of power of generator power re-dispatch, HVDC set-point control and load shedding. The model output is the TTC value of the given OC considering all contingencies.

In S1, the fast TTC estimation model consists of the SDAE and the ELM. The SDAE is used to extract high-level representations from original input features. The ELM is utilized to construct a nonlinear mapping relationship between the high-level representations and TTC. The structure of the TTC estimation model is shown in Fig. 2.

Deep learning uses multiple hidden layers to extract high-level representations from original input features, which can improve the accuracy of subsequent regression models. As a typical deep learning model, SDAE has better stability and robustness when facing practical data. Therefore, SDAE is deployed to extract high-level representations in the fast TTC estimation model.

(1) SDAE is constructed by stacking denoising autoencoders (DAEs). The model structure of DAE is the same as the autoencoder. When DAE is trained, the sample data are corrupted by the noise information to make the DAE extract more robust high-level representations.

The activation function of DAE is sigmoid function. The cost function of DAE, denoted as $L$, is expressed as

$$L(\boldsymbol{x}, \boldsymbol{z}) = \frac{1}{2}\|\boldsymbol{x} - \boldsymbol{z}\|^2 + \lambda \sum_{i=1}^{n_1} w_i^2 \qquad (1)$$

where x is the input feature vector; is the reconstructed feature vector after adding noise to x; $\lambda$ is the coefficient of regularization; $n_1$ is the number of weights; $w_i$ $(1 \le i \le n_1)$ is the weight in DAE that needs to be optimized.

(2) ELM is deployed as the regressor, whose cost function is expressed as

$$L_e = \frac{C_1}{2}\|\boldsymbol{Y} - \boldsymbol{J}\boldsymbol{w}_e\|^2 + \frac{1}{2}\|\boldsymbol{w}_e\|^2 \qquad (2)$$

where $C_1$ is the penalty coefficient; $\boldsymbol{Y}$ is the label vector of training samples; $\boldsymbol{J}$ is the output vector of hidden layer; $\boldsymbol{w}_e$ is the output weight vector of ELM.

By setting the gradient of $L_e$ with respect to $\boldsymbol{w}_e$ to zero, the optimal $\boldsymbol{w}_e$, denoted as $\boldsymbol{w}_e^*$, can be expressed as

$$\boldsymbol{w}_{e^*} = \left(\boldsymbol{J}^T\boldsymbol{J} + \frac{\boldsymbol{I}_h}{C_1}\right)^{-1} \boldsymbol{J}^T\boldsymbol{Y} \qquad (3)$$

where $h$ is the number of hidden neurons of ELM; $\boldsymbol{I}_h$ is the identity matrix of dimension $h$.

In S1, the process of generating the training samples is as follows:

(a) The load power fluctuation intervals, the wind power fluctuation intervals and the network topology of a period of time in the future are acquired.
(b) The unlabeled samples are generated. Load power and wind power are varied in the fluctuation intervals. Generator power is calculated by predefined dispatching principles. Preventive control variables are varied in predefined variation intervals.
(c) The TTC values of the unlabeled samples are calculated. Continuation power flow is used to verify static security constraints, and time-domain simulation is used to verify dynamic security constraints.

In S1, the training process of the fast TTC estimation model is as follows:

(a) Each hidden layer of SDAE is decoupled and constructed as a DAE. DAEs are trained one by one by unsupervised learning with all training samples.

(b) After SDAE is trained, the high-level representations extracted by SDAE are taken as the new sample features. ELM is trained by supervised learning with all training samples.

In S3, ATC represents the remaining transfer capability of a physical transmission network under a group of security constraints, which is defined as

$$ATC = TTC - ETC - CBM - TRM \qquad (4)$$

where ETC is existing transfer commitment; CBM is capacity benefit margin; TRM is transmission reliability margin. As CBM and TRM are usually predefined as constants for a given large scale hybrid AC/DC power grid, they are not considered in the ATC calculation.

The power grid security is reflected by the index of ATC margin, which is defined as the ratio of ATC to ETC. To guarantee the secure operation of the large scale hybrid AC/DC power grid, the ATC margin constraint that needs to be satisfied is

$$\frac{ATC}{ETC} \geq m \qquad (5)$$

where $m$ is the predefined minimum margin value.

In S3, the process of determining the types of the preventive control actions needed to satisfy the ATC margin constraint by the heuristic search algorithm is as follows.

(1) Control sensitivities of every control variable to the ATC margin are approximately calculated. First, a certain control variable is changed with a small increment. Then, the variation of TTC is calculated by the TTC estimation model, and the variation of the ATC margin is calculated.

(2) All control variables, whose control sensitivities exceed predefined sensitivity thresholds, are changed a step toward the direction of improving the ATC margin.

(3) Control variables are checked to judge whether to exceed control limits. If a control variable exceeds the predefined control limit, the control variable is set as the corresponding upper or lower limit.

(4) Loop termination conditions are checked. If one of termination conditions is satisfied, the search process is terminated.

The termination conditions include: a) An available control scheme is searched out. b) The maximum iterative number is reached. c) After the calculation of the control sensitivities, the control sensitivities of all control variables do not exceed the predefined sensitivity thresholds.

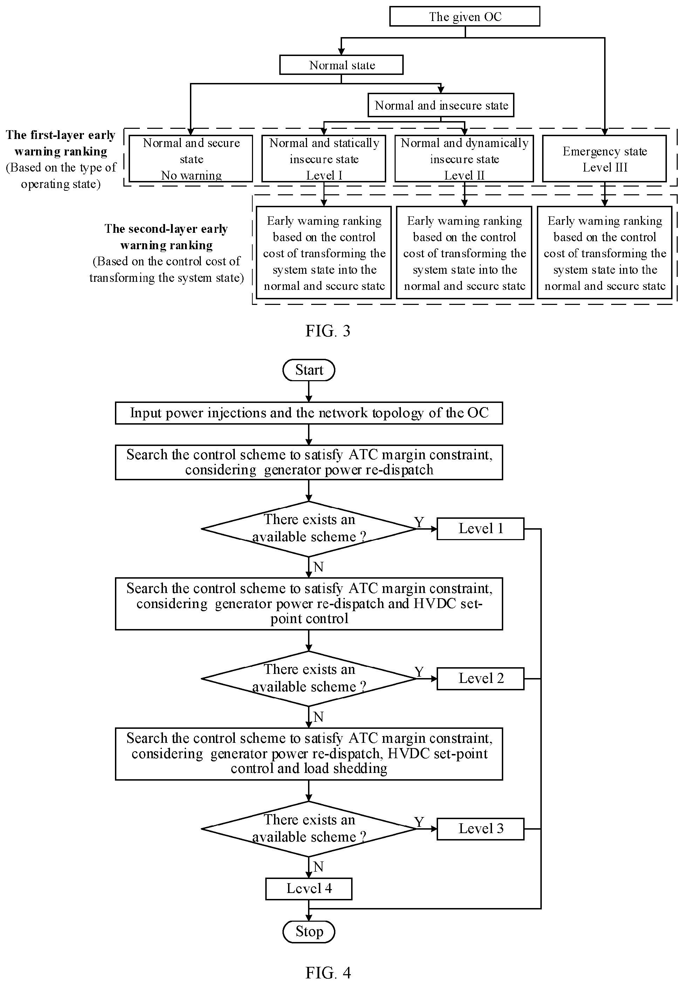

In S4, the diagram of layered and hierarchical early warning is shown in Fig. 3. After the contingency set is given, if the large scale hybrid AC/DC power grid satisfies the ATC margin constraint, the large scale hybrid AC/DC power grid is in the normal and secure state; if the large scale hybrid AC/DC power grid cannot satisfy the ATC margin constraint due to the restriction of static security constraints, the large scale hybrid AC/DC power grid is in the normal and statically insecure state; if the large scale hybrid AC/DC power grid cannot satisfy the ATC margin constraint due to the restriction of dynamic security constraints, the large scale hybrid AC/DC power grid is in the normal and dynamically insecure state; and if the large scale hybrid AC/DC power grid cannot satisfy the static security constraints in the static operating point before contingencies happen, the large scale hybrid AC/DC power grid is in the emergency state.

The first-layer early warning ranking is performed according to the type of operating state of the large scale hybrid AC/DC power grid. In increasing order of insecurity, the ranking strategy is:

No-warning: The large scale hybrid AC/DC power grid is in the normal and secure state.
Level I: The large scale hybrid AC/DC power grid is in the normal and statically insecure state.
Level II: The large scale hybrid AC/DC power grid is in the normal and dynamically insecure state.
Level III: The large scale hybrid AC/DC power grid is in the emergency state.

After the first-layer early warning ranking is finished, if the large scale hybrid AC/DC power grid is not in the normal and secure state defined by the No-warning, the second-layer early warning ranking is conducted, which is based on types of the preventive control actions needed to satisfy the ATC margin constraint. Three typical preventive control actions are considered, which include intra-area generator power re-dispatch, inter-area HVDC set-point control and load shedding. In general, intra-area power re-dispatch does not change inter-area power transactions, which has lower control cost than inter-area HVDC set-point control. Load shedding can lead to large economic loss and a negative social impact, which has the highest control cost. Based on the above analysis, in increasing order of insecurity, the further ranking strategy is:

> Level 1: Intra-area generator power re-dispatch is needed.
> Level 2: Inter-area HVDC set-point control is needed.
> Level 3: Load shedding is needed.
> Level 4: The ATC margin constraint cannot be satisfied even by the best combination of available preventive control actions.

The flowchart of early warning ranking determination based on the types of preventive control actions that are needed is shown in Fig. 4. Optimal power flow (OPF) has been used to calculate the type of control actions needed to satisfy security constraints. As ATC is restricted by dynamic security constraints, it is difficult to express the ATC margin constraint in OPF analytically. Therefore, a heuristic algorithm is used to determine the rank of the second-layer early warning. The core step in Fig. 4 is to consider certain types of preventive control actions and search for a preventive control scheme to satisfy the ATC margin constraint.

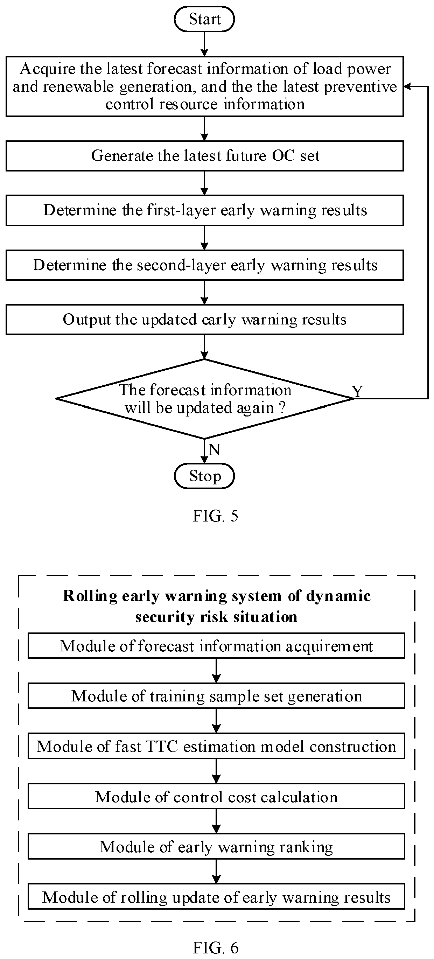

In S5, the flowchart of rolling update of early warning results is shown in Fig. 5. The process of rolling early warning is:

> (1) After the load power forecast information and the renewable generation forecast information are periodically updated, acquire the latest load power forecast information, the latest renewable generation forecast information and the latest preventive control resource information.
> (2) Generate the future OCs for early warning based on the latest load power forecast information, the latest renewable generation forecast information and the latest preventive control resource information.
> (3) Determine the first-layer early warning results for the future OCs that are generated.
> (4) Determine the second-layer early warning results for the future OCs.
> (5) Periodically update the previous early warning results.
> (6) If the load power forecast information and the renewable generation forecast information will be periodically updated again, then wait for the next update. Otherwise, the process of the rolling early warning is stopped.

In the actual large scale hybrid AC/DC power grid operation, the load power forecast information and the renewable generation forecast information will be updated periodically after a period of time. The available preventive control resources will also continuously change. The load power forecast information and the renewable generation forecast information will become more accurate along with the rolling update, and the uncertainty will decrease. Performing the early warning calculation based on the latest load power forecast information and the latest renewable generation forecast information can also improve the accuracy of early warning results. After the load power forecast information and the renewable generation forecast information is periodically updated, this embodiment updates the previous early warning results based on the latest load power forecast information, the latest renewable generation forecast information and the latest preventive control resource information, and achieves the rolling early warning.

Embodiment 2

As shown in Fig. 6, the present invention proposes a rolling early warning system of dynamic security risk situation for large scale hybrid AC/DC power grid, which includes:

The module of fast TTC estimation model construction, which is used to construct the fast TTC estimation model based on SDAE and ELM, and train the fast TTC estimation model by training samples.

The module of control cost calculation, which is used to determine types of preventive control actions needed to satisfy an ATC margin constraint by combining the fast TTC estimation model and a heuristic search algorithm.

The module of early warning ranking, which is used to perform a layered and hierarchical early warning for future OCs according to a type of operating state of the large scale hybrid AC/DC power grid and the types of the preventive control actions that are needed.

The module of rolling update of early warning results, which is used to periodically acquire latest load power forecast information, latest renewable generation forecast information and latest preventive control resource information, perform an early warning calculation repeatedly, update an early warning result, and achieve the rolling early warning.

The module of fast TTC estimation model construction also includes:

The sub-module of forecast information acquirement, which is used to acquire a network topology, load power forecast intervals, renewable generation forecast intervals and variation intervals of preventive control variables of a period of time in future.

The sub-module of training sample generation, which is used to generate many possible future OCs and calculate their TTC values based on relevant forecast information, in order to generate training samples.

In the sub-module of training sample generation, the process of the training samples generation includes:

(1) The load power fluctuation intervals, the wind power fluctuation intervals and the network topology of a period of time in the future are acquired.
(2) The unlabeled samples are generated. Load power and wind power are randomly varied in the fluctuation intervals. Generator power is calculated by predefined dispatching principles. Preventive control variables are randomly varied in predefined variation intervals.
(3) The TTC values of the unlabeled samples are calculated. Continuation power flow is used to verify static security constraints, and time-domain simulation is used to verify dynamic security constraints.

In the module of fast TTC estimation model construction, the training process of the fast TTC estimation model is:

(1) Each hidden layer of SDAE is decoupled and constructed as a DAE. DAEs are trained one by one by unsupervised learning with all training samples.
(2) After SDAE is trained, the high-level representations extracted by SDAE are taken as the new sample features. ELM is trained by supervised learning with all training samples.

In the module of control cost calculation, ATC represents the remaining transfer capability of a physical transmission network under a group of security constraints, which is defined as

$$ATC = TTC - ETC - CBM - TRM \tag{6}$$

where CBM is capacity benefit margin; TRM is transmission reliability margin. As CBM and TRM are usually predefined as constants for a given large scale hybrid AC/DC power grid, they are not considered in the ATC calculation.
The power grid security is reflected by the index of ATC margin, which is defined as the ratio of ATC to ETC. To guarantee the secure operation of the large scale hybrid AC/DC power grid, the ATC margin constraint that needs to be satisfied is

$$\frac{ATC}{ETC} \geq m \tag{7}$$

where $m$ is the predefined minimum margin value.
In the module of control cost calculation, the heuristic search algorithm includes:

(1) Control sensitivities of every control variable to the ATC margin are approximately calculated. First, a certain control variable is changed with a small increment. Then, the variation of TTC is calculated by the TTC estimation model, and the variation of the ATC margin is calculated.
(2) All control variables, whose control sensitivities exceed predefined sensitivity thresholds, are changed a step toward the direction of improving the ATC margin.
(3) Control variables are checked to judge whether to exceed control limits. If a control variable exceeds the predefined control limit, the control variable is set as the corresponding upper or lower limit.
(4) Loop termination conditions are checked. If one of termination conditions is satisfied, the search process is terminated.

The termination conditions include: a) An available control scheme is searched out. b) The maximum iterative number is reached. c) After the calculation of the control sensitivities, the control sensitivities of all control variables do not exceed the predefined sensitivity thresholds.
In the module of early warning ranking, the first-layer early warning ranking is performed according to the type of operating state of the large scale hybrid AC/DC power grid. In increasing order of insecurity, the ranking strategy is:

No-warning: The large scale hybrid AC/DC power grid is in the normal and secure state.
Level I: The large scale hybrid AC/DC power grid is in the normal and statically insecure state.
Level II: The large scale hybrid AC/DC power grid is in the normal and dynamically insecure state.
Level III: The large scale hybrid AC/DC power grid is in the emergency state.

After the first-layer early warning ranking is finished, if the large scale hybrid AC/DC power grid is not in the normal and secure state, the second-layer early warning ranking is conducted, which is based on types of preventive control actions needed to satisfy the ATC margin constraint. Three typical preventive control actions are considered, which include intra-area generator power re-dispatch, inter-area HVDC set-point control and load shedding. In general, intra-area power re-dispatch does not change inter-area power transactions, which has lower control cost than inter-area HVDC set-point control. Load shedding can lead to large economic loss and a negative social impact, which has the highest control cost.

Based on the above analysis, in increasing order of insecurity, the ranking strategy is:

Level 1: Intra-area generator power re-dispatch is needed.
Level 2: Inter-area HVDC set-point control is needed.
Level 3: Load shedding is needed.
Level 4: ATC margin constraint cannot be satisfied even by the best combination of available preventive control actions.

In the module of rolling update of early warning results, the process of the rolling early warning is:

(1) After the load power forecast information and the renewable generation forecast information are periodically updated, acquire the latest load power forecast information, the latest renewable generation forecast information, and the latest preventive control resource information.
(2) Generate the future OCs for early warning based on the latest load power forecast information, the latest renewable generation forecast information, and the latest preventive control resource information.
(3) Determine the first-layer early warning results for the future OCs that are generated.
(4) Determine the second-layer early warning results for the future OCs.
(5) Periodically update the previous early warning results.
(6) If the forecast information will be periodically updated again, wait for the next update. Otherwise, the process of the rolling early warning is stopped.

In the actual large scale hybrid AC/DC power grid operation, the load power forecast information and the renewable generation forecast information will be updated periodically after a period of time. The available preventive control resources will also continuously change. The load power forecast information and the renewable generation forecast information will become more accurate along with the rolling update, and the uncertainty will decrease. Performing the early warning calculation based on the latest load power forecast information and the latest renewable generation forecast information can also improve the accuracy of early warning results. After the load power forecast information and the renewable generation forecast information is periodically updated, this embodiment updates the previous early warning results based on the latest load power forecast information, the latest renewable generation forecast information, and the latest preventive control resource information, and achieves the rolling early warning.

Although the detailed embodiments of the present invention are described above in combination with the accompanying drawings, the protection scope of the present invention is not limited thereto. It should be understood by those skilled in the art that various modifications or variations could be made by those skilled in the art based on the technical solution of the present invention without any creative effort, and these modifications or variations shall fall into the protection scope of the present invention.

## Claims

1.    An on-line rolling early warning method of dynamic security risk situation for a large scale hybrid alternating current/direct current (AC/DC) power grid, the rolling early warning method comprising:

construct a fast total transfer capability (TTC) estimation model based on stacking denoising autoencoders (SDAE) and extreme learning machine (ELM); train the fast TTC estimation model by training samples;
generate future operating conditions (OCs) based on load power forecast information and renewable generation forecast information;
determine types of preventive control actions needed to satisfy an available transfer capability (ATC) margin constraint by combining the fast TTC estimation model and a heuristic search algorithm;
according to a type of operating state of the large scale hybrid AC/DC power grid and the types of the preventive control actions that are needed, perform a layered and hierarchical early warning for the future OCs;
periodically acquire latest load power forecast information, latest renewable generation forecast information and latest preventive control resource information; update an early warning result and achieve a rolling early warning
wherein, a training process of the fast TTC estimation model is:

each hidden layer of the SDAE is decoupled and constructed as a denoising autoencoder (DAE); DAEs are trained one by one by unsupervised learning with all the training samples;

after the SDAE is trained, high-level representations extracted by the SDAE are taken as new sample features; the ELM is trained by supervised learning with all the training samples and wherein, a process of the rolling early warning, comprising:

after the load power forecast information and the renewable generation forecast information are periodically updated, acquire latest load power forecast information, latest renewable generation forecast information, and latest preventive control resource information;

generate future OCs for early warning based on the latest load power forecast information and the latest renewable generation forecast information;

determine first-layer early warning results and second-layer early warning results for the generated future OCs;

periodically update previous early warning results; if the load power forecast information and the renewable generation forecast information will be periodically updated again, wait for a next update; otherwise, the process of the rolling early warning is stopped and wherein, a process of the layered and hierarchical early warning, comprising:

perform a first-layer early warning ranking according to the type of operating state of the large scale hybrid AC/DC power grid; in increasing order of insecurity, a ranking strategy comprises: No-warning, level I, level II, and level III;

after the first-layer early warning ranking is finished, if the large scale hybrid AC/DC power grid is not in a normal and secure state defined by the No-warning, a second-layer early warning ranking is conducted, which is based on the types of the preventive control actions needed to satisfy the ATC margin constraint; a further ranking strategy comprises:

level 1: an intra-area generator power re-dispatch is needed;
level 2: an inter-area HVDC set-point control is needed;
level 3: a load shedding is needed;
level 4: the ATC margin constraint cannot be satisfied even by a best combination of available preventive control actions..

2. The on-line rolling early warning method of claim 1, wherein, a process of generating the training samples, comprising:

Acquire load power fluctuation intervals, wind power fluctuation intervals and network topology of a period of time in the future;

generate unlabeled samples; the load power and the wind power are randomly varied in the fluctuation intervals; a generator power is calculated by predefined dispatching principles; preventive control variables are randomly varied in predefined variation intervals;

calculate TTC values of the unlabeled samples; continuation power flow is used to verify static security constraints, and a time-domain simulation is used to verify dynamic security constraints.

3. The on-line rolling early warning method of claim 1, wherein, an original feature set of the fast TTC estimation model is constructed by considering operating features relevant to the TTC and control variables of preventive control actions; the original feature set includes active power of loads, generators, wind farms and high-voltage direct-current (HVDC) links, amount of power of generator power re-dispatch, HVDC set-point control and load shedding.

4. The on-line rolling early warning method of claim 1, wherein, in the fast TTC estimation model, the SDAE is used to extract high-level representations from original input features; the ELM is utilized to construct nonlinear mapping relationship between the high-level representations and the TTC; model output is a TTC value of a given OC considering all contingencies.

5. The on-line rolling early warning method of claim 1, wherein, an ATC margin is defined as ratio of ATC to existing transfer commitment (ETC); the ATC margin constraint that needs to be satisfied is:

$$\frac{ATC}{ETC} \geq m \qquad\qquad (8)$$

where *m* is a predefined minimum margin value.

6. The on-line rolling early warning method of claim 1, wherein, a process of determining the types of the preventive control actions needed to satisfy the ATC margin constraint, comprising:

calculate approximately control sensitivities of every control variable to an ATC margin; first, a certain control variable is changed with a small increment; then, variation of TTC is calculated by the TTC estimation model, and variation of the ATC margin is calculated;

change all control variables, whose control sensitivities exceed predefined sensitivity thresholds, a step toward direction of improving the ATC margin;

check the control variables to determine whether to exceed control limits; if one of the control variables exceeds a predefined control limit, the one control variable is set as a corresponding upper or lower limit;

check loop termination conditions, if one of the loop termination conditions is satisfied, the loop is terminated.

7. An on-line rolling early warning system of dynamic security risk situation for a large scale hybrid AC/DC power grid, the rolling early warning system comprising:

a module of fast TTC estimation model construction, which is used to construct a fast TTC estimation model based on an SDAE and an ELM, and train the fast TTC estimation model by training samples;

a module of OCs generation, which is used to generate future OCs based on load power forecast information and renewable generation forecast information;

a module of control cost calculation, which is used to determine types of preventive control actions needed to satisfy an ATC margin constraint by combining the fast TTC estimation model and a heuristic search algorithm;

a module of early warning ranking, which is used to perform a layered and hierarchical early warning for the future OCs according to a type of operating state of the large scale hybrid AC/DC power grid and the types of the preventive control actions that are needed;

a module of rolling update of early warning results, which is used to periodically acquire latest load power forecast information, latest renewable generation forecast information, and latest preventive control resource information, update an early warning result and achieve a rolling early warning

wherein the module of fast TTC estimation model construction is used to implement a training process of the fast TTC estimation model wherein:

each hidden layer of the SDAE is decoupled and constructed as a denoising autoencoder (DAE); DAEs are trained one by one by unsupervised learning with all the training samples;

after the SDAE is trained, high-level representations extracted by the SDAE are taken as new sample features; the ELM is trained by supervised learning with all the training samples and wherein

wherein the module of rolling update of early warning results is used for after the load power forecast information and the renewable generation forecast information are periodically updated, acquire latest load power forecast information, latest renewable generation forecast information, and latest preventive control resource information;

generate future OCs for early warning based on the latest load power forecast information and the latest renewable generation forecast information;

determine first-layer early warning results and second-layer early warning results for the generated future OCs;

periodically update previous early warning results;

if the load power forecast information and the renewable generation forecast information will be periodically updated again, wait for a next update; otherwise, the process of the rolling early warning is stopped and wherein the early warning classification module is used for perform a first-layer early warning ranking according to the type of operating state of the large scale hybrid AC/DC power grid; in increasing order of insecurity, a ranking strategy comprises: No-warning, level I, level II, and level III;

after the first-layer early warning ranking is finished, if the large scale hybrid AC/DC power grid is not in a normal and secure state defined by the No-warning, a second-layer early warning ranking is conducted, which is based on the types of the preventive control actions needed to satisfy the ATC margin constraint; a further ranking strategy comprises:

level 1: an intra-area generator power re-dispatch is needed;
level 2: an inter-area HVDC set-point control is needed;
level 3: a load shedding is needed;

level 4: the ATC margin constraint cannot be satisfied even by a best combination of available preventive control actions.

**Patentansprüche**

1. Online rollierende Frühwarnungsverfahren zur dynamischen Sicherheitssituation für hybride AC/DC-Gitter mit großem Maßstab, wobei das rollierende Frühwarnungsverfahren die folgenden Schritte umfasst:

Bildung eines schnellen Modells zur Schätzung der Gesamtübertragungskapazität (TTC), das auf eine Stapelung von entrauschenden Auto-Encodern (SDAE) und eine Extremlernmaschine (ELM) basiert ist; Trainieren des schnellen Modells zur Schätzung der TTC mittels Trainiermuster;

Erzeugen von künftigen Betriebsbedingungen (OCs), die auf Strombelastungsvorhersageinformationen und erneuerbare Erzeugungsvorhersageinformationen basiert sind;

Bestimmung von Typen vorbeugender Kontrollmaßnahmen, die zur Erfüllung einer verfügbaren Übertragungskapazitäts-(ATC)-Marge-einschränkung erforderlich sind, indem man das schnelle TTC-Schätzungsmodell mit einem heuristischen Suchalgorithmus verbindet;

nach dem Typ des Betriebszustands des hybriden AC/DC-Gitters mit großem Maßstab und den Typen der erforderlichen vorbeugenden Kontrollmaßnahmen, Durchführen einer geschichteten und hierarchischen Frühwarnung für die künftigen OCs;

periodisches Erfassen der letzten Strombelastungsvorhersageinformationen, der letzten erneuerbaren Erzeugungsvorhersageinformationen und der letzten Quellinformationen zur vorbeugenden Kontrolle;

Aktualisierung eines Frühwarnungsergebnisses und Durchführung einer rollierenden Frühwarnung, wobei ein Trainierprozess des schnellen TTC-Schätzungsmodells ist:

jede versteckte Schicht der SDAE wird entkoppelt und als ein entrauschender AutoEncoder gebildet (DAE); DAEs werden nacheinander durch unüberwachtes Lernen mit allen Trainiermustern trainiert;

nachdem die SDAE trainiert ist, werden hochwertige aus der SDAE gewonnen Darstellungen als neue Mustermerkmale angenommen; die ELM wird durch überwachtes Lernen mit allen Trainiermustern trainiert, und wobei ein Prozess der rollierenden Frühwarnung umfasst:

nachdem die Strombelastungsvorhersageinformationen, die erneuerbaren Erzeugungsvorhersageinformationen periodisch aktualisiert sind, Erfassen der letzten Strombelastungsvorhersageinformationen, der letzten erneuerbaren Erzeugungsvorhersageinformationen und der letzten Quellinformationen zur vorbeugenden Kontrolle;

Erzeugen künftiger OCs zur Frühwarnung, die auf die letzten Strombelastungsvorhersageinformationen und die letzten erneuerbaren Erzeugungsvorhersageinformationen basiert sind;

Bestimmung von erste-Schicht-Frühwarnungsergebnissen und zweite-Schicht-Frühwarnungsergebnissen zum Erzeugen von künftigen OCs;

periodische Aktualisierung der vorhergehenden Frühwarnungsergebnissen; wenn die Strombelastungsvorhersageinformationen und die erneuerbaren Erzeugungsvorhersageinformationen wieder periodisch aktualisiert werden, warten für eine nächste Aktualisierung, sonst wird der Prozess der rollierenden Frühwarnung angehalten, und wobei ein Prozess der geschichteten und hierarchischen Frühwarnung umfasst:

Durchführen einer erste-Schicht-Frühwarnungseinstufung nach dem Typ des Betriebszustands des hybriden AC/DC-Gitters mit großem Maßstab; in steigende Reihenfolge der Unsicherheit umfasst eine Einstufungsstrategie: keine Warnung, Stufe I, Stufe II und Stufe III;

nachdem die erste-Schicht-Frühwarnungseinstufung beendet ist, wenn das hybride AC/DC-Gitter mit großem Maßstab nicht in einem normalen und sicherem durch eine keine-Warnung bestimmtem Zustand ist, wird eine zweite-Schicht-Frühwarnung durchgeführt, die auf die Typen der vorbeugenden Kontrollmaßnahmen basiert sind, die zur Erfüllung der verfügbaren Übertragungskapazitäts-(ATC)-Marge-einschränkung erforderlich sind; eine weitere Einstufungsstrategie umfasst:

Stufe 1: eine bereichsspezifische erneute Generatorstromverteilung ist erforderlich;
Stufe 2: eine bereichsübergreifende HVDC-Grenzwertkontrolle ist erforderlich;
Stufe 3: ein Lastabwurf ist erforderlich;
Stufe 4: die verfügbare Übertragungskapazitäts-(ATC)-Marge-einschränkung kann nicht erfüllt werden auch im Falle der beste Kombination der verfügbaren vorbeugenden Kontrollmaßnahmen.

2. Online rollierende Frühwarnungsverfahren nach Anspruch 1, wobei ein Prozess zur Erzeugung von Trainiermustern umfasst:

Erfassen von Belastungsstromschwankungsintervallen, von Windkraftschwankungsintervallen und der Netzwerktopologie eines zukünftigen Zeitraums;
Erzeugen unmarkierter Muster; der Belastungsstrom und der Windkraft werden willkürlich in den Schwankungsintervallen variiert; ein Generatorstrom wird mittels vorbestimmten Verteilprinzipien berechnet; vorbeugende Kontrollvariablen werden willkürlich in vorbestimmten Variationsintervallen variiert;
Berechnung von TTC-Werten der unmarkierter Muster; ein Continuation-Power-Flow-Verfahren wird zur Überprüfung der statischen Sicherheitseinschränkungen benutzt, und eine Zeit-Bereich-Simulation wird zur Überprüfung der dynamischen Sicherheitseinschränkungen benutzt.

3. Online rollierende Frühwarnungsverfahren nach Anspruch 1, wobei ein ursprünglicher Merkmalensatz des schnellen TTC-Schätzungsmodells gebildet wird, indem man für die TTC relevante Betriebsmerkmale und Kontrollvariablen der vorbeugenden Kontrollmaßnahmen betrachtet; der ursprünglicher Merkmalensatz die Wirkleistung von Belastungen, Generatoren, Windkraftanlagen und Hochspannungsgleichstromverbindungen (HVDC), die Energiemenge der wider zu verteilenden Generatorleistung, die HDVC-Grenzwertkontrolle und den Lastabwurf umfasst.

4. Online rollierende Frühwarnungsverfahren nach Anspruch 1, wobei, in dem schnellen TTC-Schätzungsmodell, die SDAE zur Gewinnung von hochwertigen Darstellungen aus ursprünglichen Eingabemerkmalen benutzt wird; die ELM zur Bildung einer nichtlinearen Abbildungsbeziehung zwischen den hochwertigen Darstellungen und der TTC benutzt wird; das Modellergebnis ein TTC-Wert einer gegebenen OC unter Berücksichtigung aller Eventualitäten ist.

5. Online rollierende Frühwarnungsverfahren nach Anspruch 1, wobei eine ATC-Marge als ein Verhältnis der ATC zur bestehenden Übertragungsverplichtung (ETC); die ATC-Marge-Einschränkung, die erfüllt werden muss ist: ATC/ETC $\geq$ m, wo m ein vorbestimmter minimaler Wert ist.

6. Online rollierende Frühwarnungsverfahren nach Anspruch 1, wobei ein Prozess der Bestimmung der Typen vorbeugender Kontrollmaßnahmen, die zur Erfüllung der ATC-Marge-Einschränkung erforderlich sind, umfasst:

annähernde Berechnung der Kontrollempfindlichkeiten jeder Kontrollvariable zu einer ATC-Marge; erstens wird eine bestimmte Kontrollvariable mit einem kleinen Zuwachs geändert, dann wird die Veränderung der TTC mittels dem TTC-Schätzungsmodell berechnet, und wird die Veränderung der ETC-Marge berechnet;
Verändern aller Kontrollvariablen, deren Kontrollempfindlichkeiten vorbestimmte Empfindlichkeitsschwellen überschreiten, ein Schritt in der Richtung der Verbesserung der ATC-Marge;
Überprüfung der Kontrollvariablen zur Bestimmung, ob die Kontrollgrenzen überschritten werden; wenn eine Kontrollvariable eine vorbestimmte Grenze überschreitet, wird die eine Kontrollvariable als eine entsprechende obere oder untere Grenze eingestellt;
Überprüfung der Schleifenbeendigungsbedingungen, wenn eine der Schleifenbeendigungsbedingungen erfüllt ist, wird die Schleife beendet.

7. Online rollierende Frühwarnungssystem zur dynamischen Sicherheitssituation für hybride AC/DC-Gitter mit großem Maßstab, wobei das rollierende Frühwarnungssystem umfasst:

ein Modul zur Bildung eines schnellen Modells zur Schätzung der Gesamtübertragungskapazität (TTC), das auf eine Stapelung von entrauschenden Auto-Encodern (SDAE) und eine Extremlernmaschine (ELM) basiert ist, und zum Trainieren des schnellen TTC-Schätzungsmodells mittels Trainiermuster;
ein Modul zur Erzeugung von OCs , das zur Erzeugung künftiger Betriebsbedingungen (OCs) benutzt wird, die auf Strombelastungsvorhersageinformationen und erneuerbare Erzeugungsvorhersageinformationen basiert sind;
ein Modul zur Kostenkontrollrechnung, das zur Bestimmung von Typen vorbeugender Kontrollmaßnahmen benutzt wird, die zur Erfüllung einer verfügbaren Übertragungskapazitäts-(ATC)-Marge-einschränkung erforderlich sind, indem man das schnelle TTC-Schätzungsmodell mit einem heuristischen Suchalgorithmus verbindet;
ein Modul zur Einstufung einer Frühwarnungseinstufung, das zur Durchführung einer geschichteten und hierarchischen Warnung für die künftigen OCs nach einem Typ des Betriebszustands des hybriden AC/DC-Gitters mit großem Maßstab und den Typen der erforderlichen vorbeugenden Kontrollmaßnahmen benutzt wird ; ein Modul zur rollenden Aktualisierung der Frühwarnungsergebnissen, das zur periodischen Erfassung der letzten Strombelastungsvorhersageinformationen, der letzten erneuerbaren Erzeugungsvorhersageinformationen und der letzten Quelleinformationen zur vorbeugenden Kontrolle, zur Aktualisierung eines Frühwarnungsergebnisses und zur Durchführung einer rollenden Frühwarnung benutzt wird, wobei das Modul zur Bildung eines schnellen TTC-Schätzungsmodells zur Implementierung eines Trainierprozesses des schnellen TTC-Schätzungsmodells benutzt wird, wobei:

jede versteckte Schicht der SDAE entkoppelt und als ein entrauschender AutoEncoder gebildet (DAE) wird; DAEs nacheinander durch unüberwachtes Lernen mit allen Trainiermustern trainiert werden; nachdem die SDAE trainiert ist, werden hochwertige aus der SDAE gewonnene Darstellungen als neue Mustermerkmale angenommen; die ELM wird durch überwachtes Lernen mit allen Trainiermustern trainiert, und wobei

das Modul zur rollenden Aktualisierung der Frühwarnungsergebnissen, nachdem die Strombelastungsvorhersageinformationen und die erneuerbaren Erzeugungsvorhersageinformationen periodisch aktualisiert sind, zur Erfassung der letzten Strombelastungsvorhersageinformationen, der letzten erneuerbaren Erzeugungsvorhersageinformationen und der letzten Quelleinformationen zur vorbeugenden Kontrolle

zur Erzeugung künftiger OCs zur Frühwarnung, die auf die letzten Strombelastungsvorhersageinformationen und die letzten erneuerbaren Erzeugungsvorhersageinformationen basiert sind;

zur Bestimmung von erste-Schicht-Frühwarnungsergebnissen und zweite-Schicht-Frühwarnungsergebnissen zum Erzeugen von künftigen OCs;

zur periodischen Aktualisierung der vorhergehenden Frühwarnungsergebnissen benutzt wird;

wenn die Strombelastungsvorhersageinformationen und die erneuerbaren Erzeugungsvorhersageinformationen wieder periodisch aktualisiert werden, warten für die nächste Aktualisierung, sonst wird der Prozess der rollierenden Frühwarnung angehalten, und wobei das Frühwarnungseinstufungsmodul zur Durchführung einer erste-Schicht-Frühwarnungseinstufung nach dem Typ des Betriebszustands des hybriden AC/DC-Gitters mit großem Maßstab; in steigende Reihenfolge der Unsicherheit umfasst eine Einstufungsstrategie: keine Warnung, Stufe I, Stufe II und Stufe III;

nachdem die erste-Schicht-Frühwarnungseinstufung beendet ist, wenn das hybride AC/DC-Gitter mit großem Maßstab nicht in einem normalen und sicheren durch eine keine-Warnung bestimmtem Zustand ist, wird eine zweite-Schicht-Frühwarnung durchgeführt, die auf die Arte der vorbeugenden Kontrollmaßnahmen basiert ist, die zur Erfüllung der verfügbaren Übertragungskapazitäts-(ATC)-Marge-einschränkung erforderlich sind; eine weitere Einstufungsstrategie umfasst:

Stufe 1: eine bereichsspezifische erneute Generatorstromverteilung ist erforderlich; Stufe 2: eine bereichsübergreifende HVDC-Grenzwertkontrolle ist erforderlich; Stufe 3: ein Lastabwurf ist erforderlich; Stufe 4: die verfügbare Übertragungskapazitäts-(ATC)-Marge-einschränkung kann nicht erfüllt werden auch in der Falle der beste Kombination der verfügbaren vorbeugenden Kontrollmaßnahmen.

## Revendications

1. Procédé d'avertissement précoce de roulement en ligne d'une situation de risque de sécurité dynamique pour un réseau électrique hybride à courant alternatif/courant continu (CA/CC) à grand échelle, le procédé d'avertissement précoce de roulement comprenant les étapes suivantes :

concevoir un modèle estimatif rapide de capacité de transfert totale (TTC) basé sur une superposition d'encodeurs automatiques de débruitage (SDAE) et sur un dispositif d'apprentissage automatique extrême (ELM) ; former le modèle estimatif rapide de TTC par des échantillons de formation ; générer des conditions de fonctionnement (OCs) futures sur base d'informations prévisionnelles de charge et d'informations prévisionnelles de génération renouvelable ; déterminer des types de mesures de contrôle préventif nécessaires à satisfaire à une contrainte marginale de capacité de transfert disponible (ATC) en combinant le modèle estimatif rapide TTC et un algorithme de recherche heuristique ; selon un type d'état de fonctionnement du réseau électrique hybride à CA/CC à grand échelle et selon les types des mesures de contrôle préventif nécessaires, réaliser un avertissement précoce en couches et hiérarchique pour les OCs futures ;

acquérir périodiquement les dernières informations prévisionnelles de charge, les dernières informations prévisionnelles de génération renouvelable et les dernières informations prévisionnelles de ressource sur le contrôle préventif ; mettre à jour un résultat d'avertissement précoce et réaliser un avertissement précoce de roulement, où un processus de formation du modèle estimatif TTC rapide est :

chaque couche cachée de la SDAE est découplée et est conçue comme un encodeur automatique de débruitage (DAE) ; les DAE sont formés un à un à un par un apprentissage non supervisé au moyen de l'ensemble des échantillon de formation ;

après que la SDAE a été formée, des représentations de haut niveau extraites par la SDAE sont adoptées comme de nouvelles caractéristiques d'échantillon ; le dispositif l'apprentissage automatique ELM est formé par un apprentissage supervisé avec tous les échantillons de formation, et où un processus de d'avertissement précoce de roulement comprend :

après que les informations prévisionnelles de charge, les informations prévisionnelles de génération renouvelable ont été périodiquement mises à jour, acquérir les dernières informations prévisionnelles de charge, les dernières informations prévisionnelles de génération renouvelable et les dernières informations prévisionnelles de ressource sur le contrôle préventif.

générer de futures des conditions de fonctionnement (OCs) pour un avertissement précoce sur base des dernières informations prévisionnelles de charge et des dernières informations prévisionnelles de génération renouvelable ;

déterminer les résultats d'avertissement précoce de première couche et les résultats d'avertissement précoce de deuxième couche pour les futures OCs générées,

mettre à jour périodiquement les résultats précédents d'avertissement précoce ; si les dernières informations prévisionnelles de charge et les dernières informations prévisionnelles de génération renouvelable sont remises à jour périodiquement, attendre la mise à jour prochaine, autrement le processus d'avertissement précoce de roulement est arrêté, et où un processus de l'avertissement précoce en couches et hiérarchique comprend :

réaliser un classement d'avertissement précoce de première couche selon le type d'état de fonctionnement du réseau électrique hybride à courant alternatif/courant continu (CA/CC) à grand échelle ; dans l'ordre d'insécurité croissante une stratégie de classement comprend : sans avertissement, nouveau I, niveau II, et niveau III ;

après que le classement d'avertissement précoce de première couche a été terminé, si le réseau électrique hybride à CA/CC à grand échelle n'est pas dans un état normal et sûr défini par un sans-avertissement, un classement d'avertissement précoce de deuxième couche est mené, qui est basé sur les types des mesures de contrôle préventif nécessaires à satisfaire à la contrainte marginale d'ATC ; une stratégie de classement supplémentaire comprend :

niveau 1 : une nouvelle répartition de l'énergie électrique à l'intérieur du territoire est nécessaire ;
niveau 2 : un contrôle de point de consigne HDVC entre les territoires est nécessaire ;
niveau 3 : un délestage des charges est nécessaire ;
niveau 4 : la contrainte marginale d'ATC ne peut être satisfaite même par une meilleure combinaison des mesures de contrôle préventif disponibles.

2. Procédé d'avertissement précoce de roulement en ligne selon la revendication 1, dans lequel un processus de générer des échantillons de formation comprend :

Acquérir des intervalles de fluctuation d'énergie électrique, des intervalles de fluctuation d'énergie éolienne, et une topologie de réseau d'une période de temps dans le futur ;

Générer des échantillons non marqués ; on fait varier l'énergie de charge et l'énergie éolienne aléatoirement dans les intervalles de fluctuation ; une puissance de générateur est calculée au moyen de principes de répartition prédéterminés ; on fait varier des variables de contrôle préventif aléatoirement dans des intervalles de variation prédéterminés ;

Calculer des valeurs TTC des échantillons non marqués ; la méthode du flux d'énergie de continuation est utilisée pour vérifier les contraintes de sécurité statique, et une méthode de simulation de temps-domaine est utilisée pour vérifier les contraintes de sécurité dynamique .

3. Procédé d'avertissement précoce de roulement en ligne selon la revendication 1, dans lequel un jeu original de caractéristiques du modèle estimatif rapide de TTC est conçu en considérant des caractéristiques de fonctionnement pertinentes pour la TTC et les variables de contrôle des mesures de contrôle préventif, le jeu original de caractéristiques comporte la puissance active de charges, des générateurs, des parcs éoliens et des liaisons en courant continu à haute tension (HVDC), la quantité de puissance de réacheminement de puissance de générateur, le contrôle de point de consigne HDVC et le délestage de charges.

4. Procédé d'avertissement précoce de roulement en ligne selon la revendication 1, dans lequel, dans le modèle estimatif rapide de TTC, la superposition SDAE est utilisée pour extraire des représentations de haut niveau des caractéristiques d'entrée originales ; le dispositif ELM est utilisé pour concevoir une relation de configuration non linéaire entre les représentations de haut niveau et la TTC ; le résultat du modèle est une valeur de TTC d'une condition de fonctionnement donnée compte tenu de toutes les éventualités.

5. Procédé d'avertissement précoce de roulement en ligne selon la revendication 1, dans lequel une marge d'ATC est définie comme étant le rapport d'ATC à l'engagement de transfert existant (ETC) ; la contrainte de marge d'ATC qui doit être satisfaite est : ATC/ETC $\geq$ m, où m est une valeur de marge minimale prédéterminée.

6. Procédé d'avertissement précoce de roulement en ligne selon la revendication 1, dans lequel un processus de détermination des types de mesures de contrôle préventif nécessaires à satisfaire la contrainte de marge d'ATC comprend les étapes de :

   calculer approximativement les sensibilités de contrôle de chaque variable de contrôle à une marge d'ATC ; en premier lieu, une variable de contrôle particulière est modifiée d'un petit incrément ; ensuite la variation de TTC est calculée par le modèle estimatif de TTC, et la variation de la marge d'ATC est calculée ;
   modifier toutes le variables de contrôle dont les sensibilités dépassent des seuils de sensibilité prédéterminés, une étape dans la direction d'améliorer la marge d'ATC ;
   vérifier les variables de contrôle afin de déterminer si elles dépassent les limites de contrôle ; si l'une des variables de contrôle dépasse une limite de contrôle prédéterminée, ladite variable de contrôle est fixée comme une limite supérieure ou inférieure correspondante ;
   vérifier les conditions de fin de bouclage, si une des conditions de fin de bouclage est satisfaite, le bouclage est terminé.

7. Système d'avertissement précoce de roulement en ligne d'une situation de risque de sécurité dynamique pour un réseau électrique hybride à courant alternatif/courant continu (CA/CC) à grand échelle, le système d'avertissement précoce de roulement comprenant :

   un module de conception d'un modèle estimatif rapide de capacité de transfert totale TTC qui est utilisé pour concevoir un modèle estimatif rapide de TTC basé sur une superposition d'encodeurs automatiques de débruitage SDAE et sur un dispositif d'apprentissage automatique extrême ELM, et pour former le modèle estimatif rapide de TTC par des échantillons de formation ;
   un module de génération de conditions de fonctionnement OCs sur base d'informations prévisionnelles de charge et d'informations prévisionnelles de génération renouvelable ;
   un module de calcul de coût de contrôle qui est utilisé pour déterminer des types de mesures de contrôle préventif nécessaires à satisfaire à une contrainte marginale de capacité de transfert disponible (ATC) en combinant le modèle estimatif rapide de TTC et un algorithme de recherche heuristique ;
   un module de classement d'avertissement précoce qui est utilisé pour réaliser un avertissement précoce en couches et hiérarchique pour les OCs futures selon un type d'état de fonctionnement du réseau électrique hybride à CA/CC à grand échelle et selon les types des mesures de contrôle préventif nécessaires ;
   un module de mise à jour de roulement de résultats d'avertissement précoces qui est utilisé pour acquérir périodiquement les dernières informations prévisionnelles de charge, les dernières informations prévisionnelles de génération renouvelable et les dernières informations prévisionnelles de ressource sur le contrôle préventif, pour mettre à jour un résultat d'avertissement précoce et réaliser un avertissement précoce de roulement :
   où le module de conception d'un modèle estimatif rapide de capacité de TTC est utilisé pour mettre en œuvre un processus de formation du modèle estimatif rapide de TTC où :

      chaque couche cachée de la SDAE est découplée et est conçue comme un encodeur automatique de débruitage (DAE) ; les DAE sont formés un à un par un apprentissage non supervisé au moyen de l'ensemble des échantillon de formation ;
      après que la SDAE a été formée, des représentations de haut niveau extraites par la SDAE sont adoptées comme de nouvelles caractéristiques d'échantillon ; le dispositif d'apprentissage automatique ELM est formé par un apprentissage non supervisé avec tous les échantillons de formation, et où le module de mise à jour de roulement de résultats d'avertissement précoce est utilisé pour acquérir, après mise à jour périodique des dernières informations prévisionnelles de charge et des dernières informations prévisionnelles de génération renouvelable, les dernières informations prévisionnelles de charge des dernières informations prévisionnelles de génération renouvelable et les dernières informations prévisionnelles de ressource sur le contrôle préventif ;

pour générer de futures des conditions de fonctionnement (OCs) pour un avertissement précoce sur base des dernières informations prévisionnelles de charge et des dernières informations prévisionnelles de génération renouvelable ;

pour déterminer les résultats d'avertissement précoce de première couche et les résultats d'avertissement précoce de deuxième couche pour les futures OCs générées ;

pour mettre à jour périodiquement les résultats précédents d'avertissement précoce ; si les informations prévisionnelles de charge et les informations prévisionnelles de génération renouvelable sont remises à jour périodiquement, attendre la mise à jour prochaine, autrement le processus d'avertissement précoce de roulement est arrêté, et où le module de classement d'avertissement précoce est utilisé pour réaliser un classement d'avertissement précoce de première couche selon le type d'état de fonctionnement du réseau électrique hybride à courant alternatif/courant continu (CA/CC) à grand échelle ; dans l'ordre d'insécurité croissante une stratégie de classement comprend : sans avertissement, niveau I, niveau II, et niveau III ;

après que le classement d'avertissement précoce de première couche a été terminé, si le réseau électrique hybride à CA/CC à grand échelle n'est pas dans un état normal et sûr défini par un sans-avertissement, un classement d'avertissement précoce de deuxième couche est mené, qui est basé sur les types des mesures de contrôle préventif nécessaires à satisfaire à la contrainte marginale d'ATC ; une stratégie de classement supplémentaire comprend :

niveau 1 : une nouvelle répartition de l'énergie électrique à l'intérieur du territoire est nécessaire ;
niveau 2 : un contrôle de point de consigne HDVC entre les territoires est nécessaire ;
niveau 3 : un délestage des charges est nécessaire ;
niveau 4 : la contrainte marginale d'ATC ne peut être satisfaite même par une meilleure combinaison des mesures de contrôle préventif disponibles.

**S1: Offline Training**

Construct the original feature set

↓

Construct the fast TTC estimation model based on SDAE and ELM

↓

Generate the training sample set

↓

Train the fast TTC estimation model

**Online Application**

S2: Generate future OCs

↓

S3: Determine the type of preventive control actions that is needed

↓

S4: Calculate the layered and hierarchical early warning results

↓

S5: Rolling update of early warning results

FIG. 1

- Active power of load
- Active power of generator
- Active power of wind
- Active power of HVDC links
- Preventive control variables

→ TTC

Original input features       SDAE       ELM

FIG. 2

The given OC

Normal state

Normal and insecure state

**The first-layer early warning ranking**
(Based on the type of operating state)

| Normal and secure state No warning | Normal and statically insecure state Level I | Normal and dynamically insecure state Level II | Emergency state Level III |

**The second-layer early warning ranking**
(Based on the control cost of transforming the system state)

| Early warning ranking based on the control cost of transforming the system state into the normal and secure state | Early warning ranking based on the control cost of transforming the system state into the normal and secure state | Early warning ranking based on the control cost of transforming the system state into the normal and secure state |

FIG. 3

Start

Input power injections and the network topology of the OC

Search the control scheme to satisfy ATC margin constraint, considering generator power re-dispatch

There exists an available scheme ? — Y → Level 1

N

Search the control scheme to satisfy ATC margin constraint, considering generator power re-dispatch and HVDC set-point control

There exists an available scheme ? — Y → Level 2

N

Search the control scheme to satisfy ATC margin constraint, considering generator power re-dispatch, HVDC set-point control and load shedding

There exists an available scheme ? — Y → Level 3

N

Level 4

Stop

FIG. 4

```
                        ┌─────────┐
                        │  Start  │
                        └────┬────┘
                             │
                             ▼
        ┌────────────────────────────────────────────────┐
        │ Acquire the latest forecast information of load │
        │ power and renewable generation, and the the     │◄──┐
        │ latest preventive control resource information  │   │
        └────────────────────┬───────────────────────────┘   │
                             ▼                                │
        ┌────────────────────────────────────────────────┐   │
        │          Generate the latest future OC set      │   │
        └────────────────────┬───────────────────────────┘   │
                             ▼                                │
        ┌────────────────────────────────────────────────┐   │
        │      Determine the first-layer early warning    │   │
        │                    results                      │   │
        └────────────────────┬───────────────────────────┘   │
                             ▼                                │
        ┌────────────────────────────────────────────────┐   │
        │     Determine the second-layer early warning    │   │
        │                    results                      │   │
        └────────────────────┬───────────────────────────┘   │
                             ▼                                │
        ┌────────────────────────────────────────────────┐   │
        │        Output the updated early warning results │   │
        └────────────────────┬───────────────────────────┘   │
                             ▼                                │
                   ╱─────────────────────╲                   │
                  ╱   The forecast         ╲        Y         │
                  ╲   information will be   ╱─────────────────┘
                   ╲  updated again ?      ╱
                    ╲─────────┬───────────╱
                              │ N
                              ▼
                        ┌─────────┐
                        │  Stop   │
                        └─────────┘
```

FIG. 5

```
 ┌─ ─── ─── ─── ─── ─── ─── ─── ─── ─── ─── ─┐
 │      Rolling early warning system of             │
 │        dynamic security risk situation           │
 │  ┌───────────────────────────────────────────┐  │
 │  │  Module of forecast information acquirement │  │
 │  └──────────────────┬────────────────────────┘  │
 │                     ▼                            │
 │  ┌───────────────────────────────────────────┐  │
 │  │   Module of training sample set generation │  │
 │  └──────────────────┬────────────────────────┘  │
 │                     ▼                            │
 │  ┌───────────────────────────────────────────┐  │
 │  │ Module of fast TTC estimation model        │  │
 │  │              construction                  │  │
 │  └──────────────────┬────────────────────────┘  │
 │                     ▼                            │
 │  ┌───────────────────────────────────────────┐  │
 │  │     Module of control cost calculation     │  │
 │  └──────────────────┬────────────────────────┘  │
 │                     ▼                            │
 │  ┌───────────────────────────────────────────┐  │
 │  │      Module of early warning ranking       │  │
 │  └──────────────────┬────────────────────────┘  │
 │                     ▼                            │
 │  ┌───────────────────────────────────────────┐  │
 │  │ Module of rolling update of early warning  │  │
 │  │                  results                   │  │
 │  └───────────────────────────────────────────┘  │
 └─ ─── ─── ─── ─── ─── ─── ─── ─── ─── ─── ─┘
```

FIG. 6

**EP 3 889 855 B1**

**Non-patent literature cited in the description**

- Coordinated Control in VSC-HVDC Multi-Terminal Systems to Improve Transient Stability: The Impact of Communication Latency. *ENERGIES*, 24 October 2019, vol. 12 (19)